# FASCICULE DE BREVET EUROPEEN

(11) **EP 1 240 782 B1**
(45) Date de publication et mention de la délivrance du brevet: **21.05.2003**
(21) Numéro de dépôt: 00990064.8
(22) Date de dépôt: 19.12.2000
(51) Int. Cl.: H04N 7/16

(54) **MODULE D'INTERFACAGE ET DECODEUR POUR UN HOTE**
SCHNITTSTELLE UND DEKODIERGERÄT FÜR EIN HOST-SYSTEM
INTERFACE MODULE AND DECODER FOR HOST

(30) Priorité: 22.12.1999 FR 9916314
(43) Date de publication de la demande: 18.09.2002
(73) Titulaire: SCM Microsystems GmbH, 85737 Ismaning (DE)
(72) Inventeur: GUENEBAUD, Philippe, c/o Cabinet Hautier, F-06000 Nice (FR)
(74) Mandataire: Degwert, Hartmut, Dipl.-Phys.
(86) Numéro de dépôt international: FR0003592
(87) Numéro de publication internationale: WO01047267

(56) Documents cités:
- EP-A- 0 562 295
- WO-A-97/18656

## Description

La présente invention concerne un module d'interfaçage pour un hôte tel qu'un décodeur de télévision numérique, permettant le traitement d'informations en provenance de l'hôte de façon conditionnée à un système à accès conditionnel comportant des moyens d'autorisation par lesquels l'usager justifie de ses droits d'accès.

Elle a aussi trait à un décodeur intégrant ledit module.

Elle se rapporte enfin à un procédé de traitement d'informations en provenance d'un hôte apte à être mis en oeuvre par le module d'interfaçage.

L'invention s'appliquera particulièrement aux décodeurs pour la réception de programmes de télévision numérique. Cependant, l'hôte considéré peut aussi être constitué par d'autres types de décodeurs ou encore, par exemple, par un ordinateur.

Avec le développement de la télévision numérique, l'emploi de décodeurs, aptes à recevoir les signaux correspondant aux programmes télévisuels et à les retransmettre après traitement en une forme intelligible à un téléviseur, a pris une grande ampleur.

Des moyens d'autorisation, comprenant par exemple des cartes à puce et par lesquels l'usager justifie de ses droits d'accès aux programmes, sont souvent mis en oeuvre.

Si l'usager est reconnu et si ses droits sont identifiés, le traitement des signaux des programmes télévisuels est effectué au sein du décodeur. Ce traitement emploie de façon courante un système à accès conditionnel spécifique. Il s'agit dans la pratique d'un logiciel fourni par l'opérateur de télévision numérique qui permet le décodage des signaux qu'il émet ou transmet, depuis un serveur, vers l'usager.

Dans un premier temps, des décodeurs distincts pour chaque opérateur ont été proposés, munis chacun d'un propre système à accès conditionnel.

Pour satisfaire l'usager ayant souscrit des abonnements auprès de plusieurs opérateurs, des décodeurs comprenant plusieurs systèmes à accès conditionnel ont été créés. Pour chaque système de contrôle d'accès, un module distinct est dans ce cas nécessaire pour coopérer chacun avec une carte à puce précise de l'usager.

Illustrant l'état de la technique ainsi exposé, on connaît du document EP-A-0562295 un appareil dans lequel plusieurs lecteurs de cartes sont reliés et commandés par un processeur unique. Une unité d'alimentation spéciale qui est commandée par le processeur alimente les lecteurs de cartes avec des tensions appropriées.

*Le document WO-A-97*/*18656 divulgue un système et procédé correspondant permettant de sélectionner l'un des signaux d'une pluralité de signaux émis par des satellites de télédiffusion directe. Une boîte de conversion ou dispositif de décryptage* *est équipée d'une pluralité de cartes à puces de décryptage différentes, toutes étant simultanément introduites dans la boîte de conversion.*

On connaît également du document EP-A-0696141 un système pour commander différents systèmes à accès conditionnel émettant des services vidéo audio et de ,données vers des récepteurs adaptés pour recevoir de tels services, système dans lequel chaque système à accès conditionnel code le service à émettre, envoie les clés de chiffrage codées nécessaires dans le récepteur et envoie les messages d'autorisation.

Le premier document ne répond pas aux besoins actuels face à la multiplication des systèmes à accès conditionnel puisqu'il ne permet l'exploitation que d'un seul système de cryptage.

Le deuxième document permet, certes, l'emploi de plusieurs systèmes de décryptage. Mais il ne l'autorise qu'en multipliant le nombre de lecteurs de carte, chaque lecteur étant affecté à un décryptage donné et donc non adaptatif.Le troisième document préconise la suppression de modules à cartes à puce alors que ceux-ci entrent dans le cadre de l'invention. De plus, il ne prévoit aucun moyen d'identification des moyens d'autorisation de l'usager (pouvant inclure ses cartes à puce).

Par conséquent, de tels dispositifs sont d'application limitée et ne permettent pas un emploi pratique par l'usager.

La présente invention permet de remédier aux inconvénients des dispositifs actuels.

En premier lieu, elle offre, dans un seul module, la possibilité d'exploiter plusieurs systèmes à accès conditionnel. On évite ainsi la multiplication des modules, des lecteurs de cartes à puce ou même des décodeurs.

L'invention simplifie en outre la tâche de l'usager car elle permet une identification automatique de ses droits.

Par exemple, si l'usager justifie de ses droits par des cartes à puce (une carte par abonnement), il n'a pas à se soucier du lecteur de cartes à puce dans lequel il insère sa carte : celle-ci sera reconnue quel que soit le lecteur employé.

Un autre objet de l'invention est d'éviter les complications liées à l'installation ou à la mise à jour des systèmes à accès conditionnel lorsque l'usager souhaite modifier ses droits (changer d'opérateur ou d'abonnement par exemple). En effet, il dispose déjà d'une multiplicité de systèmes à accès conditionnel et, si il faut effectuer une mise à jour, celle-ci peut être faite par téléchargement.

D'autres buts et avantages apparaîtront au cours de la description suivante qui n'est pas limitative de l'invention.

La présente invention concerne un module d'interfaçage pour un hôte tel qu'un décodeur de télévision numérique, permettant le traitement d'informations en provenance de l'hôte de façon conditionnée à un système à accès conditionnel comportant des moyens d'autorisation par lesquels l'usager justifie de ses droits d'accès, caractérisé par le fait qu'il possède en outre :
- au moins un moyen d'identification des moyens d'autorisation ;
- des moyens de mémorisation de plusieurs systèmes à accès conditionnel ;
- des moyens de traitement aptes à traiter les informations en provenance de l'hôte en utilisant le système à accès conditionnel correspondant aux moyens d'autorisation identifiés par le moyen d'identification permettant l'exploitation de plusieurs systèmes à accès conditionnel dans un même module.

Ce module d'interfaçage pourra se présenter sous les modes de réalisation suivants :
- les moyens d'autorisation comprennent au moins un lecteur de cartes à puce sur lesquelles sont stockées les données concernant les droits d'accès de l'usager ;
- les systèmes à accès conditionnel sont constitués d'ensembles d'instructions programmées exécutables par les moyens de traitement pour le traitement d'informations ;
- les moyens de mémorisation sont formés d'une mémoire non volatile ;
- le traitement d'information est un décodage
- les moyens d'autorisation comprennent au moins un lecteur de données biométriques dont l'identité correspond aux droits d'accès à l'usager.

L'invention concerne également un décodeur de signaux de télévision numérique intégrant au moins un module d'interfaçage.

Enfin, l'invention a trait à un procédé de traitement d'informations en provenance d'un hôte de façon conditionnée à un système à accès conditionnel, apte à être mis en oeuvre par le module d'interfaçage, dans lequel on utilise des moyens d'autorisation par lesquels l'usager justifie de ses droits d'accès, caractérisé par le fait que :
- on mémorise plusieurs systèmes à accès conditionnel ;
- on identifie les moyens d'autorisation ;
- on traite les informations en provenance de l'hôte en utilisant le système à accès conditionnel correspondant aux moyens d'autorisation identifiés.

Ce procédé pourra comporter les variantes suivantes :
- on utilise comme système à accès conditionnel des ensembles d'instructions programmées exécutables pour le traitement des informations ;
- on mémorise un ou plusieurs systèmes à accès conditionnel par téléchargement depuis un centre serveur.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une illustration d'une installation pour la réception de programmes de télévision numérique.

La figure 2 est un diagramme des moyens constitutifs du module selon l'invention dans un mode particulier de réalisation.

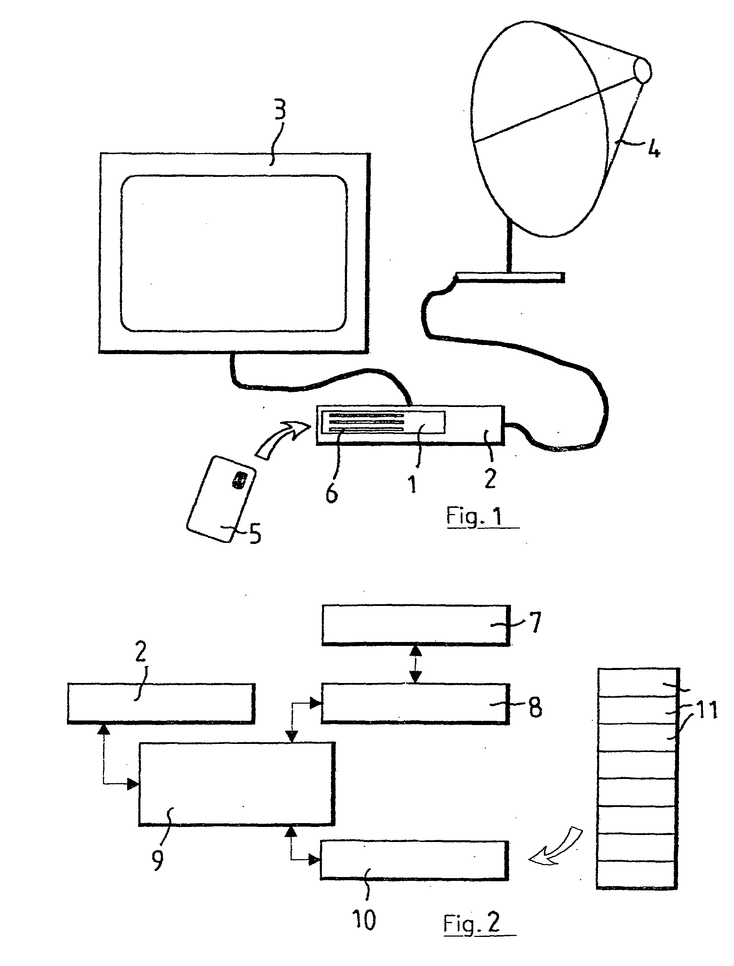

On décrit dans un premier temps le module d'interfaçage selon l'invention. Ce module est représenté en figure 1 au repère 1.

Le module d'interfaçage 1 est relié ou intégré dans son hôte 2. Cet hôte 2 peut être constitué par un décodeur de télévision numérique bien que cet exemple ne soit pas limitatif.

D'une façon générale, le module d'interfaçage 1 permet le traitement d'informations en provenance de l'hôte 2 de façon conditionnée à un système à accès conditionnel 11.

Comme illustré en figure 1, dans l'exemple d'une application à la télévision numérique, le module d'interfaçage 1 est intégré dans un décodeur constituant l'hôte 2. L'hôte 2 est quant à elle reliée à un téléviseur 3 apte à visualiser les programmes de l'usager. Par ailleurs, l'hôte 2 est relié à une antenne pour la réception des signaux correspondants aux programmes de télévision numérique de l'abonné.

Comme illustré également en figure 1, l'usager peut justifier de ses droits d'accès aux programmes par le biais de moyens d'autorisation. Dans le cas de la figure 1, les moyens d'autorisation 7 sont constitués d'une carte à puce 5 coopérant avec un lecteur de cartes à puce 6 intégré dans le module d'interfaçage 1. Il peut aussi s'agir de données biométriques lues par un lecteur approprié.

On entend par moyens d'autorisation 7 la combinaison ou l'association d'un ou plusieurs supports de données aptes à justifier des droits d'accès de l'usager et d'un ou plusieurs lecteurs de ce ou ces supports. Les lecteurs sont aptes à répercuter l'information correspondant aux droits d'accès vers d'autres moyens constitutifs du module d'interfaçage 1.

Outre l'association de cartes à puce 5 et de lecteurs de cartes à puce 6, les moyens d'autorisation peuvent être constitués sous d'autres formes et notamment sous forme de lecteurs d'empreintes digitales ou de clavier pour la saisie d'un code confidentiel.

Les systèmes à accès conditionnel 11 utilisables selon l'invention pourront être constitués par des systèmes courants connus de l'homme du métier. Il s'agira le plus souvent de logiciels exécutables si les droits d'accès de l'usager sont reconnus. Les différents systèmes à accès conditionnel seront alors constitués d'ensembles d'instructions programmées exécutables dans le module d'interfaçage 1.

Selon l'invention, le module d'interfaçage 1 possède au moins un moyen d'identification 8 des moyens d'autorisation 7.

La fonction des moyens d'identifications 8 est de reconnaître l'identité des droits de l'usager ou éventuellement de rejeter l'autorisation d'accès aux programmes de télévision numérique si l'identification est négative.

Le moyen ou les moyens d'identification 8 peuvent être constitués de façon logiciel» par le biais de programmes. Par ailleurs, ils peuvent être constitués de façon plus mécanique notamment par un traitement électronique.

On pourra faire appel aux conceptions courantes existant actuellement pour former un moyen d'identification 8 apte à reconnaître ou identifier les différents moyens d'autorisation 7.

Le module d'interfaçage 1 comprend en outre des moyens de mémorisation 10 de plusieurs systèmes à accès conditionnel 11.

D'une façon générale, les moyens de mémorisation 10 seront constitués par une unité de stockage qui pourra se présenter sous forme de mémoire non volatile. Cependant, l'emploi d'une mémoire volatile n'est pas exclu notamment si on met en oeuvre un téléchargement des systèmes à accès conditionnel 11.

Les moyens de mémorisation 10 permettent le stockage de plusieurs systèmes à accès conditionnel 11. Leur nombre n'est pas limité ce qui permet d'offrir à l'usager un module d'interfaçage 1 évolutif selon ses souhaits d'abonnements.

Le module d'interfaçage comprend en outre des moyens de traitement 9 aptes à traiter les informations en provenance de l'hôte 2.

Les moyens de traitement 9 incluent préférentiellement un processeur d'exécution des systèmes à accès conditionnel 11.

Dans le cas de l'invention, les moyens de traitement traitent des informations provenant de l'hôte 2 en utilisant un système à accès conditionnel particulier. Il s'agit du système à accès conditionnel 11 correspondant au moyen d'autorisation 7 identifié par les moyens d'identification 8.

Ainsi, les moyens de traitement 9 sont un composant actif apte à :
- comprendre l'information reçue par le moyen d'identification 8
- utiliser en conséquence un système à accès conditionnel 11
- dialoguer avec l'hôte 2 suivant ces paramètres

De cette façon, les moyens de traitement exploitent automatiquement le système à accès conditionnel 11 contenu dans les moyens de mémorisation 10 correspondant aux moyens d'autorisation 7 de l'usager.

Selon un mode préféré de réalisation, le traitement d'informations effectué par les moyens de traitement 9 est un décodage.

En se référant à la figure 2, on comprend aisément le fonctionnement du module d'interfaçage ici présenté.

Dans un premier temps, une information est transmise depuis les moyens d'autorisation 7 vers les moyens d'identification 8. Dans l'exemple de moyens d'autorisation 7 sous forme de cartes à puce 5 et de lecteurs de cartes à puce 6, ce transfert d'information se produit lorsque l'usager insère la carte à puce 5 dans le lecteur de cartes à puce 6.

Si les moyens d'autorisation 7 ne sont pas identifiés, l'usager ne pourra faire fonctionner le module d'interfaçage 1.

S'ils sont identifiés, les moyens d'identification 8 reconnaîtront l'identité des droits d'accès et transmettront une information exploitable correspondante aux moyens de traitement 9.

Selon l'information reçue, les moyens de traitement 9 utiliseront un système à accès conditionnel 11 spécifique stocké dans les moyens de mémorisation 10.

En exploitant le système à accès conditionnel correspondant aux droits de l'usager, le module d'interfaçage 1 va traiter les informations reçues de l'hôte 2.

Après traitement, ces informations pourront être exploitées par l'ensemble du dispositif, par exemple par l'association du décodeur et du téléviseur dans le cadre de la télévision numérique.

Si l'usager possède plusieurs cartes à puce 5 ou autres moyens d'autorisation 7, il pourra sans tenir compte du lecteur de cartes à puce 6 dans lequel il insère la carte à puce 5 ni d'aucune autre sélection, accéder aux programmes pour lesquels il a des droits d'accès.

Selon l'invention, le module d'interfaçage ici présenté pourra être intégré dans un décodeur de signaux de télévision numérique. Par ailleurs, un tel décodeur pourra comprendre plusieurs modules d'interfaçage 1 si nécessaire.

L'invention concerne également un procédé de traitement d'informations en provenance d'un hôte 2 apte à être mis en oeuvre par le module d'interfaçage 1 décrit précédemment.

Ce procédé effectue un traitement conditionné à un système à accès conditionnel 11.

Selon ce procédé, on utilise des moyens d'autorisation 7 par lesquels l'usager justifie de ses droits d'accès.

Par ailleurs, le procédé comprend les étapes suivantes.

Dans un première temps, on mémorise plusieurs systèmes à accès conditionnel 11.

Ensuite, on identifie les moyens d'autorisation 7 que l'usager utilise.

Si cette identification est positive, on traite les informations en provenance de l'hôte 2 en utilisant le système à accès conditionnel 11 correspondant aux moyens d'autorisation 7 identifiés.

Dans un mode préféré, on utilise comme système à accès conditionnel 11, des ensembles d'instructions programmées exécutables pour le traitement des informations.

Par ailleurs, on peut stocker de nombreux systèmes à accès conditionnel 11. Si il est nécessaire d'en ajouter ou d'en mettre à jour, cette opération peut être effectuée par téléchargement depuis un centre serveur dont dispose l'opérateur de télévision numérique (ou d'un autre service).

L'invention a été particulièrement décrite ci-dessus dans le cadre d'une application à la télévision numérique mais n'y est pas limitée.

Dans cette application, l'ensemble du procédé pourra opérer via une interface normalisée du type CI (interface commune ; « common interface ») pour le standard DVB (Digital Video Broadcasting) ou du type EIA-677 (Electronic industries alliance) pour le standard POD (Point of Development).

Selon ces normes DVB et POD, les embrouillages au niveau transport ou au niveau du flux de paquets élémentaires sont reconnus par les moyens de traitement 9 et le désembrouillage est produit automatiquement.

On peut alors utiliser plusieurs accès conditionnels (embarqués ou téléchargeables) sans intervention manuelle quelque soit la nature de l'accès conditionnel.

### REFERENCES

- 1.: module d'interfaçage
- 2.: hôte
- 3.: téléviseur
- 4.: antenne
- 5.: carte à puce
- 6.: lecteur de cartes à puce
- 7.: moyens d'autorisation
- 8.: moyen d'identification
- 9.: moyens de traitement
- 10.: moyens de mémorisation
- 11.: systèmes à accès conditionnel

## Revendications

1. Module d'interfaçage (1) pour un hôte (2) tel qu'un décodeur de télévision numérique, permettant le traitement d'informations en provenance de l'hôte (2) de façon conditionnée à un système à accès conditionnel (11) comportant des moyens d'autorisation (7) par lesquels l'usager justifie de ses droits d'accès, **caractérisé par le fait qu'**il possède en outre :
- au moins un moyen d'identification (8) des moyens d'autorisation (7);
- des moyens de mémorisation (10) de plusieurs systèmes à accès conditionnel (11) intégrés au module (1) et non aux moyens d'autorisation (7)
- des moyens de traitement (9) aptes à traiter les informations en provenance de l'hôte (2) en utilisant le système à accès conditionnel (11) correspondant aux moyens d'autorisation (7) identifiés par le moyen d'identification (8) permettant l'exploitation de plusieurs systèmes à accès conditionnel (11) dans un même module.

2. Module d'interfaçage (1) selon la revendication 1 **caractérisé par le fait que**
les moyens d'autorisation (7) comprennent au moins un lecteur de cartes à puce (6) sur lesquelles sont stockées les données concernant les droits d'accès de l'usager.

3. Module d'interfaçage (1) selon l'une quelconque des revendications 1 ou 2 **caractérisé par le fait que**
les systèmes à accès conditionnel (11) sont constitués d'ensembles d'instructions programmées exécutables par les moyens de traitement (9) pour le traitement d'informations.

4. Module d'interfaçage (1) selon l'une quelconque des revendications 1, 2 ou 3 **caractérisé par le fait que**
les moyens de mémorisation (10) sont formés d'une mémoire non volatile.

5. Module d'interfaçage (1) selon la revendication 3 **caractérisé par le fait que**
le traitement d'information est un décodage.

6. Module d'interfaçage (1) selon l'une quelconque des revendications 1 à 5, **caractérisé par le fait**
**que** les moyens d'autorisation (7) comprennent au moins un lecteur de données biométriques dont l'identité correspond aux droits d'accès à l'usager.

7. Décodeur de signaux de télévision numérique intégrant au moins un module d'interfaçage (1) selon l'une quelconque des revendications 1 à 6.

8. Procédé de traitement d'informations en provenance d'un hôte (2) de façon conditionnée à un système à accès conditionnel (11), apte à être mis en oeuvre par le module d'interfaçage (1) selon l'une quelconque des revendications 1 à 6, dans lequel on utilise des moyens d'autorisation (7) par lesquels l'usager justifie de ses droits d'accès, **caractérisé par le fait que**
- on mémorise plusieurs systèmes à accès conditionnel (11) ;
- on identifie les moyens d'autorisation (7) ;
- on traite les informations en provenance de l'hôte (2) en utilisant le système à accès conditionnel (11) correspondant aux moyens d'autorisation (7) identifiés.

9. Procédé selon revendication 8 **caractérisé par le fait que**
on utilise comme système à accès conditionnel (11) des ensembles d'instructions programmées exécutables pour le traitement des informations.

10. Procédé selon revendication 9 **caractérisé par le fait que**
on mémorise un ou plusieurs systèmes à accès conditionnel (11) par téléchargement depuis un centre serveur.

## Patentansprüche

1. Interface-Modul (1) für einen Host (2) wie ein Decoder für digitales Fernsehen, welches die einem Zugangsbedingungssystem (11) unterworfene Verarbeitung von vom Host (2) stammenden Informationen gestattet, welches Zugangsbedingungssystem Berechtigungsmittel (7) enthält, mittels derer der Benutzer seine Zugangsrechte nachweist, **dadurch gekennzeichnet, daß** es darüber hinaus aufweist:
- wenigstens ein Identifikationsmittel (8) zur Identifikation der Berechtigungsmittel (7);
- Mittel (10) für das Speichern mehrerer Zugangsbedingungssysteme (11), die im Modul (1) und nicht in den Berechtigungsmitteln (7) integriert sind;
- Mittel (9) geeignet zum Verarbeiten der vom Host (2) stammenden Informationen unter Benutzung des Zugangsbedingungssystems (11), welches dem durch das Identifikationsmittel (8) identifizierten Berechtigungsmittel (7) entspricht, wodurch die Verwendung mehrerer Zugangsbedingungssystem (11) in ein und demselben Modul gestattet wird.

2. Interface-Modul (1) nach Anspruch 1, **dadurch gekennzeichnet, daß** die Berechtigungsmittel (7) wenigstens ein Lesegerät (6) für Chipkarten enthalten, auf denen die Daten gespeichert sind, welche die Zugangsrechte des Benutzers betreffen.

3. Interface-Modul (1) nach einem der Ansprüche 1 oder 2, **dadurch gekennzeichnet, daß** die Zugangsbedingungssysteme (11) aus Mengen programmierter Anweisungen bestehen, welche zur Informationsverarbeitung durch die Verarbeitungsmittel ausführbar sind.

4. Interface-Modul (1) nach einem der Ansprüche 1, 2 oder 3, **dadurch gekennzeichnet, daß** die Speichermittel (10) aus einem nichtflüchtigen Speicher gebildet sind.

5. Interface-Modul (1) nach Anspruch 3, **dadurch gekennzeichnet, daß** die Informationsverarbeitung eine Decodierung ist.

6. Interface-Modul (1) nach einem der Ansprüche 1 bis 5, **dadurch gekennzeichnet, daß** die Berechtigungsmittel (7) wenigstens ein Lesegerät für biometrische Daten enthalten, deren Identität den Zugangsrechten des Benutzers entspricht.

7. Signaldecoder für digitales Fernsehen, zu dem wenigstens ein Interface-Modul (1) nach einem der Ansprüche 1 bis 6 gehört.

8. Verfahren zur einem Zugangsbedingungssystem (11) unterworfenen Verarbeitung von von einem Host (2) stammenden Informationen, das sich zur Ausführung durch ein Interface-Modul (1) nach einem der Ansprüche 1 bis 6 eignet, und bei welchem Berechtigungsmittel (7) verwendet werden, mittels derer der Benutzer seine Zugangsrechte nachweist, **dadurch gekennzeichnet, daß**
- mehrere Zugangsbedingungssysteme (11) gespeichert werden;
- die Berechtigungsmittel (7) identifiziert werden;
- die vom Host (2) stammenden Informationen unter Benutzung des Zugangsbedingungssystems (11), welches dem identifizierten Berechtigungsmittel (7) entspricht, verarbeitet werden.

9. Verfahren nach Anspruch 8, **dadurch gekennzeichnet, daß** als Zugangsbedingungssystem (11) Mengen programmierter Anweisungen verwendet werden, welche zur Informationsverarbeitung ausführbar sind.

10. Verfahren nach Anspruch 9, **dadurch gekennzeichnet, daß** eines oder mehrere Zugangsbedingungssysteme (11) durch Herunterladen von einer Serverzentrale gespeichert werden.

## Claims

1. Interface module (1) for a host (2) such as a digital television decoder, permitting the processing of information coming from the host (2) in a manner subject to a conditional access system (11) comprising authorization means (7) by which the user justifies his access rights, **characterized in that** it further comprises:
- at least one means (8) for identification of the authorization means (7);
- storage means for several conditional access systems (11) integrated in the module (1) and not in the authorization means (7)
- processing means (9) being suitable for processing the information coming from the host (2) by using the conditional access system (11) corresponding to the authorization means (7) identified by the identification means (8) permitting the exploitation of plural conditional access systems (11) in one and the same module.

2. Interface module (1) according to claim 1, **characterized in that** the authorization means (7) comprise at least one reader (6) for chipcards on which data concerning the access rights of the user are stored.

3. Interface module (1) according any one of claims 1 or 2, **characterized in that** the conditional access systems (11) consist of sets of programmed instructions executable by the processing means (9) for the processing of information.

4. Interface module (1) according any one of claims 1, 2 or 3, **characterized in that** the storage means are formed of a non-volatile memory.

5. Interface module (1) according claim 3, **characterized in that** the processing of information is decoding.

6. Interface module (1) according any one of claims 1 to 5, **characterized in that** the authorization means (7) comprise at least one reader for biometric data the identity of which corresponds to the access rights of the user.

7. Digital television signal decoder integrating at least one interface module (1) according any one of claims 1 to 6.

8. Method of processing information coming from a host (2) in a manner subject to a conditional access system (11), suitable for being performed by the interface module (1) according any one of claims 1 to 6, using authorization means (7) by which the user justifies his access rights, **characterized in that**
- plural conditional access systems (11) are stored;
- the authorization means (7) are identified;
- the information coming from the host (2) are processed by using the conditional access system (11) corresponding to the identified authorization means (7).

9. Method according to claim 8, **characterized in that** sets of programmed instructions executable for the processing of information are used as conditional access system (11).

10. Method according to claim 9, **characterized in that** one or plural conditional access systems (11) are stored by download from a server center.
